# FASCICULE DE BREVET EUROPEEN

(11) **EP 3 947 151 B1**
(45) Date de publication et mention de la délivrance du brevet: **11.10.2023**
(21) Numéro de dépôt: 20726214.8
(22) Date de dépôt: 16.03.2020
(51) Int. Cl.: B64D 13/06

(54) **SYSTÈME DE CONDITIONNEMENT D'AIR BITURBINE**
FLUGZEUGKLIMAANLAGE MIT ZWEI TURBOMASCHINEN
ENVIRONMENTAL CONTROL SYTEM USING TWO TURBOMACHINES

(30) Priorité: 02.04.2019 FR 1903493
(43) Date de publication de la demande: 09.02.2022
(73) Titulaire: Liebherr-Aerospace Toulouse SAS, 31200 Toulouse (FR)
(72) Inventeur: SANCHEZ, Frédéric, 31016 TOULOUSE Cedex 2 (FR); LAVERGNE, David, 31016 TOULOUSE Cedex 2 (FR); MILLE, Vinciane, 31016 TOULOUSE Cedex 2 (FR)
(74) Mandataire: Bringer IP
(86) Numéro de dépôt international: PCT/FR2020/050560
(87) Numéro de publication internationale: WO 2020/201654

(56) Documents cités:
- EP-A1- 3 385 170
- WO-A1-99/12810
- DE-A1-102008 033 560
- DE-A1-102015 222 193
- FR-A1- 2 829 466
- US-A1- 2013 039 736

## Description

### Domaine technique de l'invention

L'invention concerne un système de conditionnement d'air d'une cabine d'aéronef. En particulier, l'invention concerne un système de conditionnement d'air comprenant deux turbomachines motorisées.

### Arrière-plan technologique

Dans tout le texte, le terme « cabine » désigne tout espace intérieur d'un aéronef dont la pression et/ou la température de l'air doit être contrôlée. Il peut s'agir d'une cabine pour passagers, du cockpit de pilotage, d'une soute, et de manière générale de toute zone de l' aéronef qui nécessite un air à une pression et/ou une température contrôlée. Cet air à une pression et/ou une température contrôlée est fourni par un système de conditionnement d'air.

Les systèmes de conditionnement d'air comportant des turbomachines motorisées présentent des avantages particuliers et sont de plus en plus utilisés dans les aéronefs à architecture dite « plus électrique » dans lesquels des circuits électriques permettent la transmission d'énergie dans l'aéronef, à contrario des architectures précédentes où la plupart de l'énergie transmise était directement issue de prélèvement d'air au niveau du ou des moteurs ou d'un groupe auxiliaire de puissance.

En particulier, les systèmes de conditionnement d'air prélevaient une partie du flux d'air traversant les moteurs après leur compression, ce qui implique une baisse de charge et une réduction de l'efficacité du moteur pour la poussée ou la sustentation de l'aéronef.

Un système de conditionnement d'air comportant des turbomachines motorisées permet la génération autonome d'une source pneumatique de pression, notamment en prélèvement de l'air extérieur non pressurisé via des écopes, ce qui n'a pas d'effet sur les performances des moteurs.

Cette source pneumatique est ensuite traitée, notamment par le biais d'une extraction de l'eau et d'un refroidissement avant distribution dans la cabine de l'aéronef via une chambre de mélange (ou mélangeur) et un système de distribution.

FR 2 829 466 A1 divulgue un système de conditionnement d'air comportant deux turbomachines motorisées, les compresseurs peuvent être mis en parallèle et les turbines en série.

### Objectifs de l'invention

L'invention vise à fournir un système de conditionnement d'air plus efficace et plus performant.

L'invention vise en particulier à fournir un système de conditionnement d'air bénéficiant d'une intégration optimisée et compacte, avec un gain en masse et/ou en encombrement.

L'invention vise également à fournir un système de conditionnement d'air fiable et permettant la limitation de la plage de débit réduit entre les conditions de l'aéronef au sol ou en vol.

L'invention vise également à adapter le comportement du système de conditionnement d'air en fonction des conditions de vol de l'aéronef, et en particulier en fonction de son altitude.

### Exposé de l'invention

Pour ce faire, l'invention concerne un système de conditionnement d'air d'une cabine d'aéronef, comprenant :
- une première turbomachine motorisée, dite turbomachine d'extraction d'eau, comprenant un compresseur, une turbine d'extraction d'eau comprenant une sortie et une entrée, et un moteur entrainant en rotation le compresseur et la turbine d'extraction d'eau,
- une deuxième turbomachine motorisée, dite turbomachine de refroidissement, comprenant un compresseur, une turbine de refroidissement comprenant une entrée et une sortie, et un moteur entrainant en rotation le compresseur et la turbine de refroidissement,
- une boucle d'extraction d'eau reliée à l'entrée de la turbine d'extraction d'eau et comprenant un condenseur et un séparateur d'eau,
- une sortie du système de conditionnement d'air, configurée pour pouvoir être reliée à la cabine de l'aéronef, le compresseur de la turbomachine d'extraction d'eau et le compresseur de la turbomachine de refroidissement sont configurés pour recevoir de l'air extérieur à l'aéronef et sont montés en parallèle de sorte à pouvoir alimenter une sortie commune,

la turbine d'extraction d'eau et la turbine de refroidissement sont montées en série de sorte que la sortie de la turbine d'extraction d'eau soit reliée fluidiquement à l'entrée de la turbine de refroidissement, et la sortie de la turbine de refroidissement est reliée à la sortie du système de conditionnement d'air,
le système de conditionnement d'air comprend en outre un réseau de conduites et de vannes associées, relié à la sortie commune des compresseurs et permettant d'alimenter à partir de la sortie commune des compresseurs :
   - soit l'entrée de la turbine d'extraction d'eau,
   - soit l'entrée de la turbine de refroidissement par contournement de la turbine d'extraction d'eau et de la boucle d'extraction d'eau,
   - soit directement la sortie du système de conditionnement d'air, par contournement de la turbine de refroidissement, de la turbine d'extraction d'eau et de la boucle d'extraction d'eau.

On entend par « contournement » des turbines une fonction *by-pass* ou *bypass* de ces turbines permettant d'éviter le passage de flux d'air dans ces turbines, avantageusement grâce à des vannes *by-pass* ou *bypass.*

Un système de conditionnement d'air selon l'invention permet donc une meilleure gestion des conditions de vol de l'aéronef et ainsi de maximiser ses performances. Le système de conditionnement permet la production de plus de puissance froide, en particulier en pouvant utiliser la turbine de refroidissement sans contrainte liée à la turbine d'extraction d'eau. En outre, la disposition des compresseurs en parallèles, les sorties des compresseurs alimentant la sortie commune, permet de fiabiliser le système de conditionnement d'air et permet la limitation de la plage de débit réduit entre les conditions de l'aéronef au sol ou en vol. Le rendement aérodynamique est amélioré et cela permet de potentiellement éviter l'emploi d'un diffuseur variable.

Le domaine d'utilisation du système de conditionnement d'air est étendu et plus flexible, grâce au découplage de la fonction dite « puissance froide » (liée à la turbine de refroidissement permettant de fournir de l'air refroidi), et la fonction d'extraction d'eau liée à la turbine d'extraction d'eau.

L'utilisation de compresseurs liés permet de s'affranchir d'une source externe d'air pressurisé. En particulier, chaque compresseur peut assurer l'intégralité de la fourniture en air du système de conditionnement d'air, notamment si l'un des compresseurs est en panne ou si une des turbomachines motorisées est arrêtée.

L'ensemble des ces avantages permet une intégration optimisée et compacte, notamment un gain de masse et d'encombrement, en réalisant les fonctions de conditionnement d'air avec un nombre d'équipement limité tout en conservant une grande flexibilité.

Dans les systèmes de l'art antérieur, les fonctions de refroidissement et d'extraction d'eau ne sont pas découplées ce qui limite toute optimisation selon les phases de vol et les conditions climatiques. De plus, la mise en série des compresseurs dans les systèmes de l'art antérieur ne permet pas une fiabilité suffisante, notamment dans les architectures d'aéronef « plus électrique ».

L'invention permet une architecture de système de conditionnement d'air fiable, flexible, et s'adaptant facilement selon que l'aéronef soit au sol, en vol, et en fonction de l'altitude.

Avantageusement, un système de conditionnement d'air selon l'invention comprend :
- un module de commande, configuré pour commander le réseau de conduites et de vannes en fonction de l'altitude de l'aéronef et de la température de l'air au niveau de la sortie commune, pour permettre d'alimenter à partir de la sortie commune des compresseurs :
   o soit l'entrée de la turbine d'extraction d'eau, lorsque l'aéronef est au sol ou en basse altitude,
   o soit directement l'entrée de la turbine de refroidissement en contournant la turbine d'extraction d'eau et la boucle d'extraction d'eau par ouverture d'une première vanne, lorsque l'aéronef est à moyenne altitude et/ou la température de l'air est supérieure à un seuil prédéterminé,
   o soit directement la sortie du système de conditionnement d'air, en contournant la turbine de refroidissement, la turbine d'extraction d'eau et la boucle d'extraction d'eau par ouverture de la première vanne et d'une seconde vanne, lorsque l'aéronef est à haute altitude et/ou lorsque la température de l'air est inférieure au seuil prédéterminé.

Selon cette variante de l'invention, le système de conditionnement d'air permet de s'adapter aux différentes conditions de vol de l'aéronef dans lequel il est intégré.

En particulier, lorsque l'aéronef est au sol et à basse altitude (par exemple en dessous de 15000 pieds d'altitude), la génération de puissance froide et la séparation de l'eau sont nécessaires et fonctionnent donc de manière nominale, c'est-à-dire que les turbines de refroidissement et d'extraction d'eau ne sont pas contournées.

Lorsque l'aéronef est à moyenne altitude (par exemple supérieure à 15000 pieds par jour chaud et inférieure à 25000), la séparation de l'eau n'est plus nécessaire et est rendue inactive pas le contournement de la turbine d'extraction d'eau et de la boucle d'extraction d'eau (par exemple par ouverture d'une vanne de contournement ou vanne de bypass).

Lorsque l'aéronef est à haute altitude (par exemple supérieure à 25000 pieds) et lorsque les conditions de température le permettent, la turbine de refroidissement peut aussi être contournée car le besoin de puissance froide est moins élevé, car l'air extérieur prélevé est suffisamment froid.

Avantageusement, un système de conditionnement d'air selon l'invention comprend une conduite reliant la cabine à l'entrée de la turbine d'extraction d'eau et/ou l'entrée de la turbine de refroidissement.

Selon cet aspect de l'invention, l'air sortant de la cabine de l'aéronef, souvent appelé « air vicié », peut être récupéré pour alimenter l'entrée d'une des turbines du système de conditionnement d'air. Cela permet une récupération d'énergie qui entraine la ou les turbines, réduisant ainsi la consommation électrique du système de conditionnement d'air.

Cette variante de l'invention est particulièrement intéressante pour alimenter une turbine lorsqu'elle est contournée par le système de conditionnement d'air, auquel cas elle n'est plus utilisée. L'alimentation par l'air vicié permet de récupérer de l'énergie pour faire fonctionner les compresseurs.

Avantageusement, un système de conditionnement selon l'invention comprend au moins un échangeur configuré pour être traversé par de l'air sortant de la sortie de la turbine d'extraction d'eau. Cet échangeur fait de préférence partie de la boucle de refroidissement d'eau, et est typiquement un condenseur/réchauffeur (*condenser*/*reheater* en anglais).

Avantageusement, un système de conditionnement selon l'invention comprend au moins un aubage fixe à section d'injection variable monté sur la turbine d'extraction d'eau et/ou sur la turbine de refroidissement d'air de manière à pouvoir modifier sur commande le débit d'air alimentant une entrée d'air de la ou les turbines sur laquelle l'aubage est monté.

L'invention concerne également un procédé de commande d'un système de conditionnement d'air selon l'invention, le procédé comprenant :
- une étape de réception d'une donnée représentative de l'altitude de l'aéronef,
- une étape de réception d'une donnée représentative de la température de l'air au niveau de la sortie commune des compresseurs,
- une étape de sélection d'un mode de fonctionnement en fonction de l'altitude de l'aéronef et la température de l'air au niveau de la sortie commune des compresseurs, parmi :
   o un premier mode de fonctionnement lorsque l'altitude de l'aéronef est inférieure à un premier seuil prédéterminé, dans lequel le réseau de conduites et de vannes est configuré pour connecter la sortie commune à la turbine d'extraction d'eau ;
   o un deuxième mode de fonctionnement lorsque l'altitude de l'aéronef est supérieure au premier seuil prédéterminé et inférieure à un deuxième seuil prédéterminé, et/ou lorsque la température de l'air est supérieure à un seuil prédéterminé, dans lequel le réseau de conduites et de vannes est configuré pour connecter la sortie commune à la turbine de refroidissement en contournant la turbine d'extraction d'eau et la boucle d'extraction d'eau ;
   o un troisième mode de fonctionnement lorsque l'altitude de l'aéronef est supérieure au deuxième seuil prédéterminé ou la température de l'air est inférieure à un seuil prédéterminé, dans lequel le réseau de conduites et de vannes est configuré pour connecter la sortie commune à la sortie du système de conditionnement d'air.

L'invention concerne également un aéronef comprenant une cabine, caractérisé en ce qu'il comprend un système de conditionnement d'air selon l'invention, ledit système de conditionnement d'air alimentant en air conditionné ladite cabine de l'aéronef.

Les avantages d'un système de conditionnement d'air selon l'invention s'appliquent mutatis mutandis à un aéronef selon l'invention.

L'invention concerne également un système de conditionnement d'air, un procédé de commande d'un tel système de conditionnement d'air, et un aéronef comprenant un tel système de conditionnement d'air.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique d'un système de conditionnement d'air selon un mode de réalisation de l'invention.
[Fig. 2] est une vue schématique d'un procédé de commande selon un mode de réalisation de l'invention.

### Description détaillée d'un mode de réalisation de l'invention

Sur les figures, les échelles et les proportions ne sont pas strictement respectées et ce, à des fins d'illustration et de clarté.

En outre, les éléments identiques, similaires ou analogues sont désignés par les mêmes références dans toutes les figures.

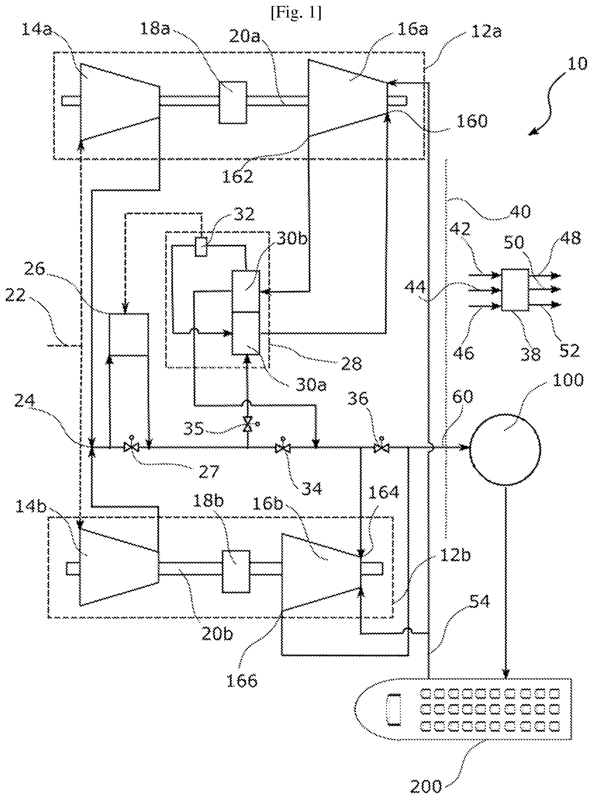

La figure 1 représente schématiquement un système 10 de conditionnement d'air selon un mode de réalisation de l'invention. Le système de conditionnement d'air comprend une sortie 60, alimentant ici une chambre de mélange ou mélangeur 100 alimentant en air conditionné la cabine 200 d'un aéronef.

Le système 10 de conditionnement d'air comprend une première turbomachine motorisée, dite turbomachine 12a d'extraction d'eau, et une deuxième turbomachine motorisée, dite turbomachine 12b de refroidissement.

Chaque turbomachine motorisée comprend, de façon classique, un compresseur, une turbine et un moteur reliés sur un même arbre, la rotation de ces trois éléments étant liée par ledit arbre. En particulier, le moteur peut générer un couple entrainant une rotation de l'arbre et ainsi une rotation du compresseur et de la turbine associés.

En particulier, la turbomachine 12a d'extraction d'eau comprend un compresseur 14a, une turbine 16a d'extraction d'eau et un moteur 18a, ces éléments étant liés en rotations par un arbre 20a.

De la même façon, la turbomachine 12b de refroidissement comprend un compresseur 14b, une turbine 16b de refroidissement et un moteur 18b, ces éléments étant liés en rotations par un arbre 20b.

Le compresseur 14a de la turbomachine 12a d'extraction et le compresseur 14b de la turbomachine 12b de refroidissement ont des fonctions similaires : les deux compresseurs 14a, 14b reçoivent de l'air 22 extérieur à l'aéronef lorsque les moteurs des turbomachines motorisées les entrainent en rotation, par exemple en provenance d'une écope disposée sur la paroi extérieure de l'aéronef. Cet air est compressé et l'air compressé provenant des deux compresseurs alimente une sortie 24 commune aux deux compresseurs. Les deux compresseurs sont disposés en parallèle, chaque compresseur alimentant directement la sortie 24 commune. Chaque compresseur est configuré pour pouvoir alimenter seul la sortie 24 commune, notamment en cas de panne d'un des deux compresseurs ou si une des deux turbomachines motorisées est arrêtée.

L'air compressé alimentant la sortie 24 commune est ensuite traité par le système de conditionnement d'air pour atteindre les critères de température, de pression et d'humidité pour pouvoir alimenter la cabine 200 de l'aéronef via le mélangeur 100. Un réseau de conduites et de vannes, décrit ci-dessous, permet le passage de l'air dans différents dispositifs permettant son traitement de la sortie 24 commune à la sortie 60 du système de conditionnement d'air, permettant ainsi d'alimenter le mélangeur 100.

Dans un premier temps, l'air peut être classiquement refroidi dans un échangeur 26 alimenté par un passage d'air dynamique (communément appelé *ram air* en anglais) de l'aéronef. Ce refroidissement peut être contourné par une vanne 27 si la température de l'air est suffisante.

Ensuite, un passage de l'air est possible dans une boucle 28 d'extraction d'eau. Cette boucle 28 d'extraction d'eau comprend un condenseur comprenant un premier échangeur 30a de chaleur et un deuxième échangeur 30b de chaleur configurés pour refroidir l'air compressé. L'air compressé traverse les deux échangeurs et est ainsi refroidi une première fois, ce qui facilite la condensation de l'eau dans l'air.

En sortie d'échangeur, un séparateur 32 d'eau (ou extracteur d'eau) permet de réduire la quantité d'eau présente dans l'air. Par exemple, ce séparateur d'eau peut être de type à centrifuge, et permet la récupération de l'eau qui peut être réinjectée dans l'air dynamique pour augmenter les performances de l'échangeur 26.

L'air dont l'eau a été extraite passe dans le premier échangeur 30a pour refroidir l'air compressé entrant dans la boucle 28 d'extraction d'eau, et parvient dans une entrée 160 de la turbine 16a d'extraction d'eau. L'air est ainsi détendu et ressort par une sortie 162 de la turbine 16a d'extraction d'eau. Cet air détendu passe par le deuxième échangeur 30b pour refroidir l'air compressé entrant dans la boucle 28 d'extraction d'eau.

Les deux échangeurs forment un condenseur/réchauffeur (*condenser*/*reheater* en anglais).

Le système de conditionnement d'air comprend une première vanne 34 de contournement, ou vanne bypass, permettant de contourner la boucle 28 d'extraction d'eau et la turbine 16a d'extraction d'eau si l'humidité de l'air de la sortie commune est suffisamment faible.

Une vanne 35 de blocage, facultative, est aussi présente dans ce mode de réalisation et permet de bloquer totalement l'accès à la boucle 28 d'extraction d'eau et à la turbine 16a d'extraction d'eau. Selon un autre mode de réalisation non décrit, la première vanne 34 de contournement et la vanne 35 de blocage peuvent être toutes les deux remplacées par une unique vanne trois-voies, permettant de diriger le flux d'air soit vers la boucle 24 d'extraction d'eau, soit vers la turbine 16b de refroidissement et/ou la sortie 60, en bloquant ou non l'accès à la boucle 24 d'extraction d'eau.

L'air provenant de la sortie de la turbine 16a d'extraction d'eau, ou directement de la sortie 24 commune si la vanne 34 de contournement est ouverte, peut ensuite être dirigé vers une entrée 164 de la turbine 16b de refroidissement pour être de nouveau détendu et refroidi. L'air ainsi détendu et refroidi sort de la turbine 16b de refroidissement par une sortie 166 de la turbine de refroidissement.

La sortie 166 de la turbine 16b de refroidissement est reliée à la sortie 60 du système de conditionnement d'air, elle-même reliée au mélangeur 100 pour permettre l'alimentation en air conditionné de la cabine 200 de l'aéronef.

Le système de conditionnement d'air comprend une deuxième vanne 36 de contournement, ou vanne bypass, permettant de contourner la turbine 16b de refroidissement si la température de l'air de la sortie commune est suffisamment faible.

Ainsi, si l'air fourni par les compresseurs au niveau de la sortie 24 commune présente les bonnes conditions de température et d'humidité, et éventuellement de pression ou d'autres paramètres, la première vanne 34 de contournement et la deuxième vanne 36 de contournement peuvent être ouvertes et la sortie 24 commune est directement reliée à la sortie 60 du système de conditionnement d'air.

Les conditions d'ouverture ou de fermeture de ces vannes de contournement sont gérées par un module 38 de commande. Le module de commande est généralement disposé, comme le mélangeur 100, dans la zone pressurisée de l'aéronef, tandis que le reste du système 10 de conditionnement d'air est disposé dans une zone non-pressurisée. La frontière entre la zone pressurisée et la zone non-pressurisée est symbolisée par la ligne 40 en pointillé.

Le module 38 de commande reçoit une multitude d'informations provenant des capteurs (non représentés) dans le système de conditionnement d'air, notamment des capteurs fournissant :
- des informations 42 ou données représentatives de la température de l'air au niveau de la sortie commune,
- des informations 44 ou données représentatives de l'humidité de l'air au niveau de la sortie commune,
- des informations 46 ou données représentatives de l'altitude de l'aéronef,
- et d'autres informations ou données pouvant être pertinentes pour le contrôle du système de conditionnement d'air.

Le module 38 de commande, en fonction des ces données, peut envoyer des signaux de commande d'ouverture ou de fermeture de vannes et en particulier peut envoyer :
- un signal 48 de commande à la vanne 27,
- un signal 50 de commande à la première vanne 34 de contournement,
- un signal 52 de commande à la deuxième vanne 36 de contournement.

Pour gérer l'envoi des signaux, le module 38 de commande peut suivre un procédé de commande préprogrammé.

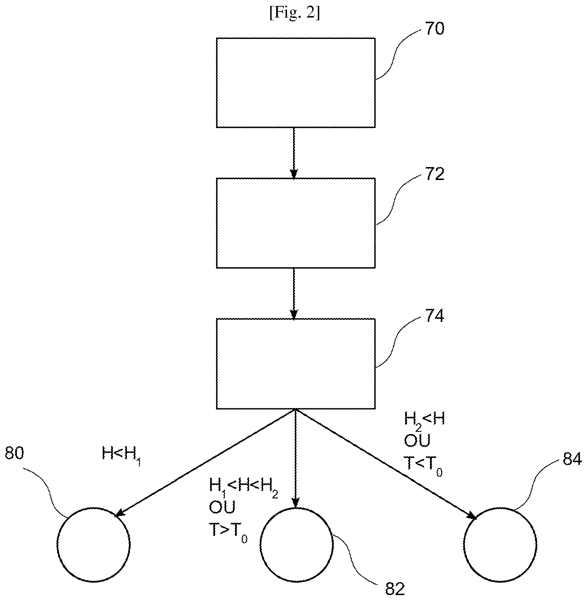

Par exemple, un procédé de commande selon un mode de réalisation de l'invention, tel que représenté sur la figure 2, peut comprendre :
- une étape 70 de réception d'une donnée représentative de l'altitude de l'aéronef,
- une étape 72 de réception d'une donnée représentative de la température de l'air au niveau de la sortie commune des compresseurs,
- une étape 74 de sélection d'un mode de fonctionnement en fonction de l'altitude de l'aéronef et la température de l'air extérieur, parmi :
   o un premier mode 80 de fonctionnement lorsque l'altitude de l'aéronef est inférieure à un premier seuil H₁ prédéterminé, dans lequel le réseau de conduites et de vannes est configuré pour connecter la sortie commune à la turbine d'extraction d'eau ;
   o un deuxième mode 82 de fonctionnement lorsque l'altitude de l'aéronef est supérieure au premier seuil H₁ prédéterminé et inférieure à un deuxième seuil H₂ prédéterminé, ou lorsque la température de l'air est supérieure à un seuil prédéterminé, dans lequel le réseau de conduites et de vannes est configuré pour connecter la sortie commune à la turbine de refroidissement en contournant la turbine d'extraction d'eau et la boucle d'extraction d'eau ;
   o un troisième mode 84 de fonctionnement lorsque l'altitude de l'aéronef est supérieure au deuxième seuil prédéterminé ou la température de l'air est inférieure à un seuil prédéterminé, dans lequel le réseau de conduites et de vannes est configuré pour connecter la sortie commune à la sortie du système de conditionnement d'air.

Dans ce mode de réalisation, l'air sortant de la cabine 200 de l'aéronef, souvent appelé « air vicié », peut être récupéré pour alimenter l'entrée d'une ou de plusieurs des turbines du système de conditionnement d'air, par exemple ici l'entrée 164 de la turbine 16b de refroidissement et l'entrée 160 de la turbine 16A d'extraction d'eau, via une conduite 54. Cela permet une récupération d'énergie qui entraine la ou les turbines lorsque celles-ci ne sont pas utilisées pour leur fonction respective de refroidissement ou d'extraction d'eau, réduisant ainsi la consommation électrique du système de conditionnement d'air.

## Revendications

1. Système de conditionnement d'air d'une cabine d'aéronef, comprenant :
- une première turbomachine motorisée, dite turbomachine (12a) d'extraction d'eau, comprenant un compresseur (14a), une turbine (16a) d'extraction d'eau comprenant une sortie (162) et une entrée (160), et un moteur (18a) entrainant en rotation le compresseur (14a) et la turbine (16a) d'extraction d'eau,
- une deuxième turbomachine motorisée, dite turbomachine (12b) de refroidissement, comprenant un compresseur (14b), une turbine (16b) de refroidissement comprenant une entrée (164) et une sortie (166), et un moteur (18b) entrainant en rotation le compresseur (14b) et la turbine (16b) de refroidissement,
- une boucle (28) d'extraction d'eau reliée à l'entrée (160) de la turbine (16a) d'extraction d'eau et comprenant un condenseur (30a ; 30b) et un séparateur (32) d'eau,
- une sortie (60) du système de conditionnement d'air, configurée pour pouvoir être reliée à la cabine (200) de 1 aéronef,
le compresseur (14a) de la turbomachine (12a) d'extraction d'eau et le compresseur (14b) de la turbomachine (12b) de refroidissement étant configurés pour recevoir de l'air (22) extérieur à l'aéronef et êtant montés en parallèle de sorte à pouvoir alimenter une sortie (24) commune,
la turbine (16a) d'extraction d'eau et la turbine (16b) de refroidissement étant montées en série de sorte que la sortie (162) de la turbine (16a) d'extraction d'eau soit reliée fluidiquement à l'entrée (164) de la turbine (16b) de refroidissement, et la sortie (166) de la turbine (16b) de refroidissement étant reliée à la sortie (60) du système de conditionnement d'air,
le système de conditionnement d'air étant **caractérisé en ce qu'**il comprend un réseau de conduites et de vannes associées, relié fluidiquement à la sortie (24) commune des compresseurs et permettant d'alimenter à partir de ladite sortie (24) commune des compresseurs :
- soit l'entrée (160) de la turbine (16a) d'extraction d'eau,
- soit l'entrée (164) de la turbine (16b) de refroidissement par contournement de la turbine (16a) d'extraction d'eau et de la boucle d'extraction d'eau,
- soit directement la sortie (60) du système de conditionnement d'air, par contournement de la turbine (16b) de refroidissement, de la turbine (16a) d'extraction d'eau et de la boucle d'extraction d'eau.

2. Système de conditionnement d'air selon la revendication 1, **caractérisé en ce qu'**il comprend :
- un module (38) de commande, configuré pour commander le réseau de conduites et de vannes en fonction de l'altitude de l'aéronef et de la température de l'air au niveau de la sortie (24) commune, pour permettre d'alimenter à partir de ladite sortie (24) commune des compresseurs :
- soit l'entrée (160) de la turbine (16a) d'extraction d'eau, lorsque l'aéronef est au sol ou en basse altitude,
- soit directement l'entrée (164) de la turbine (16b) de refroidissement en contournant la turbine (16a) d'extraction d'eau et la boucle d'extraction d'eau par ouverture d'une première vanne (34), lorsque l'aéronef est à moyenne altitude et/ou la température de l'air est supérieure à un seuil prédéterminé,
- soit directement la sortie du système de conditionnement d'air, en contournant la turbine (16b) de refroidissement, la turbine (16a) d'extraction d'eau et la boucle d'extraction d'eau par ouverture de la première vanne (34) et d'une seconde vanne (36), lorsque l'aéronef est à haute altitude et/ou lorsque la température de l'air est inférieure au seuil prédéterminé.

3. Système de conditionnement d'air selon l'une des revendications 1 ou 2, **caractérisé en ce qu'**il comprend une conduite (54) configurée pour relier la cabine à l'entrée (160) de la turbine (16a) d'extraction d'eau et/ou l'entrée (164) de la turbine (16b) de refroidissement, de manière à alimenter la ou les turbines avec de l'air, dit air vicié, expulsé de ladite cabine.

4. Système de conditionnement d'air selon l'une des revendication 1 à 3, **caractérisé en ce qu'**il comprend au moins un échangeur configuré pour être traversé par de l'air sortant de la sortie (162) de la turbine d'extraction d'eau.

5. Système de conditionnement d'air selon l'une des revendications 1 à 4, **caractérisé en ce qu'**il comprend au moins un aubage fixe à section d'injection variable monté sur la turbine (16a) d'extraction d'eau et/ou sur la turbine (16b) de refroidissement d'air de manière à pouvoir modifier sur commande le débit d'air alimentant une entrée d'air de la ou les turbines sur laquelle l'aubage est monté.

6. Procédé de commande d'un système de conditionnement d'air selon l'une des revendications 1 à 5, le procédé comprenant :
- une étape (70) de réception d'une donnée représentative de l'altitude de l'aéronef,
- une étape (72) de réception d'une donnée représentative de la température de l'air au niveau de la sortie (24) commune des compresseurs,
- une étape (74) de sélection d'un mode de fonctionnement en fonction de l'altitude de l'aéronef et la température de l'air au niveau de la sortie commune des compresseurs, parmi :
- un premier mode (80) de fonctionnement lorsque l'altitude de l'aéronef est inférieure à un premier seuil prédéterminé, dans lequel le réseau de conduites et de vannes est configuré pour connecter la sortie commune à la turbine d'extraction d'eau ;
- un deuxième mode (82) de fonctionnement lorsque l'altitude de l'aéronef est supérieure au premier seuil prédéterminé et inférieure à un deuxième seuil prédéterminé, et/ou lorsque la température de l'air est supérieure à un seuil prédéterminé, dans lequel le réseau de conduites et de vannes est configuré pour connecter la sortie (24) commune à la turbine (16b) de refroidissement en contournant la turbine (16a) d'extraction d'eau et la boucle d'extraction d'eau ;
- un troisième mode (84) de fonctionnement lorsque l'altitude de l'aéronef est supérieure au deuxième seuil prédéterminé ou la température de l'air est inférieure à un seuil prédéterminé, dans lequel le réseau de conduites et de vannes est configuré pour connecter la sortie (24) commune à la sortie (60) du système de conditionnement d'air.

7. Aéronef comprenant une cabine (200), **caractérisé en ce qu'**il comprend un système (10) de conditionnement d'air selon l'une des revendications 1 à 5, ledit système (10) de conditionnement d'air alimentant en air conditionné ladite cabine (200) de l'aéronef.

## Patentansprüche

1. Klimaanlage für eine Flugzeugkabine, welche umfasst:
- eine erste motorisierte Turbomaschine, Wasserentnahme-Turbomaschine (12a) genannt, mit einem Verdichter (14a), einer Wasserentnahme-Turbine (16a) mit einem Auslass (162) und einem Einlass (160) und einem Motor (18a), der den Verdichter (14a) und die Wasserentnahme-Turbine (16a) in Drehung versetzt,
- eine zweite motorisierte Turbomaschine, Kühlturbomaschine (12b) genannt, mit einem Verdichter (14b), einer Kühlturbine (16b) mit einem Einlass (164) und einem Auslass (166) und einem Motor (18b), der den Verdichter (14b) und die Kühlturbine (16b) in Drehung versetzt,
- einen Wasserentnahmekreislauf (28), der mit dem Einlass (160) der Wasserentnahme-Turbine (16a) verbunden ist und einen Kondensator (30a; 30b) und einen Wasserabscheider (32) umfasst,
- einen Auslass (60) der Klimaanlage, der ausgestaltet ist, mit der Kabine (200) des Flugzeugs verbunden zu werden;
worin der Verdichter (14a) der Wasserentnahme-Turbomaschine (12a) und der Verdichter (14b) der Kühlturbomaschine (12b) ausgestaltet sind, Luft (22) von außerhalb des Flugzeugs aufzunehmen und parallel montiert sind, um einen gemeinsamen Auslass (24) speisen zu können,
die Wasserentnahme-Turbine (16a) und die Kühlturbine (16b) in Reihe geschaltet sind, so dass der Auslass (162) der Wasserentnahme-Turbine (16a) mit dem Einlass (164) der Kühlturbine (16b) fluidmäßig verbunden ist und der Auslass (166) der Kühlturbine (16b) mit dem Auslass (60) der Klimaanlage verbunden ist,
und die Klimaanlage **dadurch gekennzeichnet ist, dass** diese ein Netz von Leitungen und zugehörigen Ventilen umfasst, die mit dem gemeinsamen Auslass (24) der Kompressoren fluidmäßig verbunden sind und es ermöglichen, von dem gemeinsamen Auslass (24) der Kompressoren
- entweder den Einlass (160) der Wasserentnahme-Turbine (16a),
- oder den Einlass (164) der Kühlturbine (16b), unter Umgehung der Wasserentnahme-Turbine (16a) und des Wasserentnahmekreislaufs,
- oder direkt am Auslass (60) der Klimaanlage, unter Umgehung der Kühlturbine (16b), der Wasserentnahme-Turbine (16a) und des Wasserentnahmekreislaufs zu versorgen.

2. Klimaanlage nach Anspruch 1, **dadurch gekennzeichnet, dass** diese umfasst:
- ein Steuermodul (38), das ausgestaltet ist, das Netz von Leitungen und Ventilen in Abhängigkeit von der Flughöhe des Flugzeugs und der Temperatur der Luft am gemeinsamen Auslass (24) zu steuern, um die Versorgung von dem gemeinsamen Auslass (24) der Kompressoren zu ermöglichen:
- entweder an den Einlass (160) der Wasserentnahme-Turbine (16a), wenn sich das Flugzeug am Boden oder in geringer Flughöhe befindet,- oder direkt zum Einlass (164) der Kühlturbine (16b) unter Umgehung der Wasserentnahme-Turbine (16a) und des Wasserentnahmekreislaufs durch Öffnen eines ersten Ventils (34), wenn sich das Flugzeug in mittlerer Flughöhe befindet und/oder wenn die Lufttemperatur über einem gegebenen Schwellenwert liegt,
- oder direkt zum Auslass der Klimaanlage unter Umgehung der Kühlturbine (16b), der Wasserentnahme-Turbine (16a) und des Wasserentnahmekreislaufs durch Öffnen des ersten Ventils (34) und eines zweiten Ventils (36), wenn sich das Flugzeug in großer Flughöhe befindet und/oder wenn die Lufttemperatur unter dem gegebenen Schwellenwert liegt.

3. Klimaanlage nach einem der Ansprüche 1 oder 2, **dadurch gekennzeichnet, dass** dieses eine Leitung (54) umfasst, die ausgestaltet ist, die Kabine mit dem Einlass (160) der Wasserentnahme-Turbine (16a) und/oder dem Einlass (164) der Kühlturbine (16b) zu verbinden, um die Turbine(n) mit Luft, als verbrauchte Luft bezeichnet, zu versorgen, die aus der Kabine ausgestoßen wird.

4. Klimaanlage nach einem der Ansprüche 1 bis 3, **dadurch gekennzeichnet, dass** diese mindestens einen Wärmetauscher umfasst, der ausgestaltet ist, von der am Auslass (162) der Wasserentnahme-Turbine austretenden Luft durchströmt zu werden.

5. Klimaanlage nach einem der Ansprüche 1 bis 4, **dadurch gekennzeichnet, dass** diese mindestens ein feststehendes Schaufelblatt mit variablem Einspritzquerschnitt umfasst, das an der Wasserentnahme-Turbine (16a) und/oder an der Luftkühlturbine (16b) angebracht ist, um den Luftstrom, der einen Lufteinlass der Turbine(n) versorgt, an der/denen das Schaufelblatt angebracht ist, auf Befehl verändern zu können.

6. Verfahren zur Steuerung einer Klimaanlage nach einem der Ansprüche 1 bis 5, worin das Verfahren umfasst:
- einen Schritt (70), in dem Daten empfangen werden, die der Flughöhe des Flugzeugs entsprechen,
- einen Schritt (72), in dem Daten empfangen werden, die der Lufttemperatur am gemeinsamen Kompressorauslass (24) entsprechen,
- einen Schritt (74), in dem ein Betriebsmodus auf der Grundlage der Flughöhe des Flugzeugs und der Temperatur der Luft am gemeinsamen Kompressorauslass ausgewählt wird unter:
- einem ersten Betriebsmodus (80), wobei, wenn die Flughöhe des Flugzeugs unter einem ersten bestimmten Schwellenwert liegt, das Netz von Leitungen und Ventilen ausgestaltet ist, den gemeinsamen Auslass mit der Wasserentnahme-Turbine zu verbinden;
- einem zweiten Betriebsmodus (82), wobei, wenn die Flughöhe des Flugzeugs größer als der erste bestimmte Schwellenwert und kleiner als ein zweiter bestimmter Schwellenwert ist und/oder wenn die Lufttemperatur größer als ein bestimmter Schwellenwert ist, das Netz von Leitungen und Ventilen ausgestaltet ist, den gemeinsamen Auslass (24) mit der Kühlturbine (16b) unter Umgehung der Wasserentnahme-Turbine (16a) und des Wasserentnahmekreislaufs zu verbinden; und
- einem dritten Betriebsmodus (84), wobei, wenn die Flughöhe des Flugzeugs größer als der zweite bestimmte Schwellenwert ist oder die Lufttemperatur unter einem bestimmten Schwellenwert liegt, das Netz von Leitungen und Ventilen ausgestaltet ist, den gemeinsamen Auslass (24) mit dem Auslass (60) der Klimaanlage zu verbinden.

7. Luftfahrzeug mit einer Kabine (200), **dadurch gekennzeichnet, dass** dieses eine Klimaanlage (10) nach einem der Ansprüche 1 bis 5 umfasst, worin die Klimaanlage (10) die Kabine (200) des Luftfahrzeugs mit Luftaufbereitung versorgt.

## Claims

1. Aircraft cabin air conditioning system, comprising:
- a first motorized turbomachine, referred to as a water extraction turbomachine (12a), comprising a compressor (14a), a water extraction turbine (16a) comprising an outlet (162) and an inlet (160), and a motor (18a) driving the compressor (14a) and the water extraction turbine (16a) in rotation,
- a second motorized turbomachine, referred to as a cooling turbomachine (12b), comprising a compressor (14b), a cooling turbine (16b) comprising an inlet (164) and an outlet (166), and a motor (18b) driving the compressor (14b) and the cooling turbine (16b) in rotation,
- a water extraction loop (28) connected to the inlet (160) of the water extraction turbine (16a) and comprising a condenser (30a; 30b) and a water separator (32),
- an outlet (60) from the air conditioning system, configured such that it can be connected to the cabin (200) of the aircraft
the compressor (14a) of the water extraction turbomachine (12a) and the compressor (14b) of the cooling turbomachine (12b) being configured to receive air (22) outside the aircraft and being mounted in parallel so as to be able to feed a common outlet (24),
the water extraction turbine (16a) and the cooling turbine (16b) being mounted in series such that the outlet (162) of the water extraction turbine (16a) is fluidly connected to the inlet (164) of the cooling turbine (16b), and the outlet (166) of the cooling turbine (16b) being connected to the outlet (60) of the air conditioning system,
the air conditioning system being **characterized in that** it comprises a network of pipes and associated valves, fluidly connected to the common outlet (24) of the compressors and making it possible to supply, from the common outlet (24) of the compressors:
- either the inlet (160) of the water extraction turbine (16a),
- or the inlet (164) of the cooling turbine (16b), bypassing the water extraction turbine (16a) and the water extraction loop,
- or, directly, the outlet (60) of the air conditioning system, bypassing the cooling turbine (16b), the water extraction turbine (16a) and the water extraction loop.

2. Air conditioning system according to claim 1, **characterized in that** it comprises:
- a control module (38), configured to control the network of pipes and valves according to the altitude of the aircraft and the temperature of the air at the common outlet (24), to allow supply from the common outlet (24) of the compressors:
- either to the inlet (160) of the water extraction turbine (16a), when the aircraft is on the ground or at low altitude,
- or to the inlet (164) of the cooling turbine (16b) directly, bypassing the water extraction turbine (16a) and the water extraction loop by opening a first valve (34), when the aircraft is at medium altitude and/or when the air temperature is greater than a predetermined threshold,
- or to the outlet of the air conditioning system directly, bypassing the cooling turbine (16b), the water extraction turbine (16a) and the water extraction loop by opening the first valve (34) and a second valve (36), when the aircraft is at high altitude and/or when the air temperature is below the predetermined threshold.

3. Air conditioning system according to one of claims 1 or 2, **characterized in that** it comprises a pipe (54) configured to connect the cabin to the inlet (160) of the water extraction turbine (16a) and/or the inlet (164) of the cooling turbine (16b), so as to supply the turbine(s) with air, called stale air, expelled from said cabin.

4. Air conditioning system according to one of claims 1 to 3, **characterized in that** it comprises at least one exchanger configured to be passed through by air leaving the outlet (162) of the water extraction turbine.

5. Air conditioning system according to one of claims 1 to 4, **characterized in that** it comprises at least one fixed blading with variable injection section mounted on the water extraction turbine (16a) and/or on the air cooling turbine (16b) so as to be able to modify, on command, the air flow supplying an air inlet of the turbine(s) on which the blading is mounted.

6. Method for controlling an air conditioning system according to one of claims 1 to 5, the method comprising:
- a step (70) in which data representative of the altitude of the aircraft is received,
- a step (72) in which data representative of the air temperature at the common compressor outlet (24) is received,
- a step (74) in which an operating mode based on the altitude of the aircraft and the temperature of the air at the common compressor outlet is selected from:
- a first operating mode (80) when the altitude of the aircraft is below a first predetermined threshold, in which the network of pipes and valves is configured to connect the common outlet to the water extraction turbine;
- a second operating mode (82) when the altitude of the aircraft is greater than the first predetermined threshold and less than a second predetermined threshold, and/or when the air temperature is greater than a predetermined threshold, in which the network of pipes and valves is configured to connect the common outlet (24) to the cooling turbine (16b), bypassing the water extraction turbine (16a) and the water extraction loop;
- a third operating mode (84) when the altitude of the aircraft is greater than the second predetermined threshold or the air temperature is below a predetermined threshold, in which the network of pipes and valves is configured to connect the common outlet (24) to the outlet (60) of the air conditioning system.

7. Aircraft comprising a cabin (200), **characterized in that** it comprises an air conditioning system (10) according to one of claims 1 to 5, said air conditioning system (10) supplying said cabin (200) of the aircraft with air conditioning.
